# EUROPEAN PATENT SPECIFICATION

(11) **EP 1 496 753 B1**
(45) Date of publication and mention of the grant of the patent: **13.06.2007**
(21) Application number: 03718446.2
(22) Date of filing: 17.04.2003
(51) Int. Cl.: A23G 4/08

(54) **CHEWING GUM BASE AND CHEWING GUM WITH ULTRA HIGH MOLECULAR WEIGHT POLYVINYLACETATE**
KAUGUMMIGRUNDLAGE UND KAUGUMMI MIT SEHR HOCHMOLEKULAREM POLYVINYLACETAT
BASE DE CHEWING-GUM ET CHEWING-GUM CONTENANT DU POLYVINYLACETATE DE POIDS MOLECULAIRE ULTRA-ELEVE

(30) Priority: 19.04.2002 US 63405
(43) Date of publication of application: 19.01.2005
(73) Proprietor: WM. WRIGLEY JR. COMPANY, Chicago, Illinois 60611 (US)
(72) Inventor: ROSS, Lasha, Henderson, NV 89012 (US); BUNCZEK, Michael, Lisle, IL 60532 (US)
(74) Representative: Hayes, Adrian Chetwynd
(86) International application number: PCT/US2003/012014
(87) International publication number: WO 2003/088757

(56) References cited:
- WO-A-00/08944
- WO-A-97/00619
- US-A- 4 357 355
- US-A- 4 711 784
- US-A- 4 992 280
- US-A- 5 108 762
- US-A- 5 601 858
- US-B1- 6 190 706
- US-B1- 6 238 710

## Description

### BACKGROUND OF THE INVENTION

The present invention relates to the composition of, and methods of producing a chewing gum base. More specifically, the present invention relates to chewing gum base compositions that produce gum base having reduced adhesion to indoor and outdoor surfaces as compared to typical chewing gum compositions.

When chewing gum is chewed, an insoluble portion remains. Although the remaining insoluble portion can be easily disposed of without creating any problems, when improperly disposed of, can create environmental issues. In this regard, the improper disposal of chewing gum, e.g. expectorating the chewing gum on a sidewalk, floor, or like area, can create a nuisance. Due to their typical formulation, chewing gums have an adhesive-like characteristic. Therefore, the chewed gum can stick to environmental surfaces onto which they are intentionally or unintentionally placed. Such environmental surfaces can include concrete, flooring materials, walls, fabric, carpeting, metal, wood, plastic, glass and other surfaces. This is very difficult to remove once it sticks and can be cause for great frustration. Used chewing gum cuds can also be unsightly when stuck to surfaces in public places. It is because of these circumstances that there is a consumer demand for an environmentally friendly chewing gum.

The present invention provides a chewing gum base containing an effective amount of an ultra high molecular weight polyvinylacetate to make an environmentally friendly chewing gum. It is known in the art of chewing gum making to include polyvinylacetate in chewing gum base for the purpose of making a non-adhesive chewing gum. United State Patent Number 4,357,355 entitled Non-Stick Bubble Gum Base Composition claims the use of polyvinylacetate in bubble gum. The PVAc disclosed and claimed has a molecular weight less than or equal to 94,000 daltons. The present invention differs from U.S. Patent 4,357,355 in that the molecular weights of the PVAc's used are 100,000 Dalton and greater.

US-A-5,601,858 discloses a non-stick, chewing gum base composition which is free from fats, waxes, and elastomer solvent resins, and a non-stick chewing gum composition made from the gum base. High molecular weight polyvinyl acetate having a weight average molecular weight of from 56,000 to 500,000 is employed in the composition in an amount of up to 10%.

WO 00/08944 discloses a non-stick, chewing gum composition containing from 2 to 25% of a plasticized proteinaceous material and a combination of gum base materials, absent elastomer solvent and wax, which render the composition non-stick with respect to non-porous surfaces such as denture materials as well as common surfaces such as floors and including porous surfaces such as carpets. The chewing gum composition can also include polyvinyl acetate with a weight average molecular weight of from 8000 to 100,000.

US-B-6,190,706 discloses a chewing gum base comprising a siloxane polymer that is solid at room temperature and has an average molecular weight of 300,000 to one million. The average molecular weight of the polar polymers is 10,000 to 200,000.

WO-A-97/00619 discloses a chewing gum which includes sucrose fatty acid esters which can be used in the base and/or gum as a plasticizer, softener and emulsifier.

### SUMMARY OF THE INVENTION

The present invention provides a gum base, and resulting chewing gum, that is environmentally friendly. As used herein, the term "environmentally friendly" refers to chewing gum compositions that can be easily removed from indoor or outdoor surfaces. A chewing gum cud, which is easily removable, is one which has a 50% or greater reduction in removal time and less than 20% by weight residue remaining on a surface to which it was stuck. Chewing gums which can be made from the chewing gum base of the present invention include chewing gums and bubble gums standard in the art.

The present invention provides a chewing gum base containing an effective amount of an ultra high molecular weight polyvinylacetate to make an environmentally friendly chewing gum. The addition of ultra high molecular weight polyvinylacetate increases the cohesion of the chewing gum, preventing it from sticking to other surfaces and increasing the ease at with which it can be removed from other surfaces.

The present invention provides a gum base comprising: a) 15 to 65% ultra high molecular weight polyvinylacetate (UHMW PVAc) with molecular weight ranging between 300,000 and 600,000 daltons; b) 10 to 50% plasticizer; and c) 1 to 30% filler.

In a preferred embodiment, the gum base further comprises a fat at a level up to 60% by weight of the gum base.

In a preferred embodiment, the gum base further comprises a resin at a level up to 60% by weight of the gum base.

In a preferred embodiment, the gum base further comprises an emulsifier at a level up to 60% by weight of the gum base.

In a preferred embodiment, the gum base further comprises a sugar fatty acid ester at a level of up to 60% by weight of the gum base.

### DETAILED DESCRIPTION OF PREFERRED EMBODIMENTS OF THE INVENTION

The present invention provides improved gum bases. Moreover, the present invention provides improved chewing gum made from the gum bases. The present invention provides a more environmentally friendly gum cud.

The present invention uses the ultra high molecular weight PVAc to the advantage of increasing the cohesion in the chewing gum base to render it environmentally friendly by increasing its removability from surfaces other than the oral cavity.

The ultra high molecular weight polyvinylacetates (UHMW PVAc) used in the present invention are of molecular weights ranging from 300,000 to 600,000 daltons. The UHMW PVAc used in the present invention are commercially available through Wacker Polymer Systems. The chewing gum base of the present invention also includes a plasticizer and a filler.

The UHMW PVAc is used in an amount ranging from 15% to 65% by weight of the chewing gum base. The plasticizer is used in an amount ranging from 10% to 50% by weight of the chewing gum base. The filler is present in an amount of 1% to 30% by weight of the chewing gum base.

In the present invention, a sugar fatty acid ester may be present In an amount up to 35% by weight of the chewing gum base. Resins may also be present in an amount up to 30% by weight of the chewing gum base:

In a preferred embodiment of the invention there is 60% ultra high molecular weight polyvinylacetate, 35% plasticizer and 5% filler.

In a preferred embodiment of the invention there is 60% ultra high molecular weight polyvinylacetate, 25% plasticizer, 5% fat, 5% sugar fatty acid ester and 5% filler.

Plasticizers used in the present invention may include triacetin, medium chain triglyceride, mono- di- and triglycerides of fatty acids, glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin; pentaerythritol ester of rosin, synthetic elastomer; plasticizers, terpene resins derived from alpha-pinene, beta=pinene or d-limonene, triglycerides of non-hydrogenated, partially hydrogenated and fully hydrogenated cottonseed oil, soybean oil, palm oil, palm kernel oil, coconut oil, safflower oil, tallow oil, cocoa butter, unsaturated oils that contain, as one or more of their constituent groups, fatty acids of carbon chain length of from 6 to 18, monoglycerides, diglycerides, acetylated monoglycerides, distilled mono-and di-glyercides and lecithin may, from their manufacturing processing, contain triglyceride levels less than 2 percent by weight Mono- and diglycerides maybe considered as being of the same family as fats.

Preferred plasticizers include triacetin, acytylated mono- and di- and triglycerides of short chain fatty acids, acetylated mono- and di- and triglycerides of medium chain fatty acids, acetylated monoglycerides of long chain fatty acids, methyl ester of rosin, low molecular weight PVAc. A preferred plasticizer will have a hydrophilicity similar to PVAc.

The chewing gum base of the present invention may further comprise a PVAc of molecular weight ranging from 2,000 to 99,000. The present invention may also further comprise a rubber. The rubber may be selected from the group consisting of polyisobutylene, butyl rubber, styrene butadiene, polyisoprene rubber, butadiene rubber and natural rubbers.

In a preferred embodiment the present invention further comprises a low molecular weight PVAc, ranging in molecular weight 2,000 to 20,000 daltons, which is present in the amount up to 50% by weight of the chewing gum base.

In a preferred embodiment the present invention further comprises a medium molecular weight PVAc, ranging in molecular weight 20,001 to 60,000 daltons, which is present in the amount up to 50% by weight of the chewing gum base.

In a preferred embodiment the present invention further comprises a high molecular weight PVAc, ranging in molecular weight 60,001 to 90,000 daltons, which is present in the amount up to 50% by weight of the chewing gum base.

Fillers used in the present invention .may be selected from carbonate or precipitated carbonate types such as magnesium and calcium carbonate, ground limestone, silicate types such as magnesium and aluminum silicate, day alumina, talc, titanium dioxide, mono-, di- and tricalcium phosphate, cellulose polymers such as ethyl, methyl and wood, organic powders such as polystyrene, polyethylene, oat fiber, wood fiber, apple fiber, zein, gluten, gliadin, caseine, etc. and mixtures thereof.

Emulsifiers, which also sometimes have plasticizing properties, used in the present invention may be selected from the following, glycerol mono and distearate, lecithin, mono and di-glycerides of fatty acids, triacetin, acetylated monoglyceride, polyglycerol esters, glycerol triacetate and carbohydrate polyesters, or combinations thereof.

It is an advantage of the present invention to provide a more environmentally friendly chewing gum base and chewing gum. If cud is disposed of improperly, it is removable via a scraper.

The present invention provides a firm chew, bulky cud with no tack to the teeth of the chewer and is easily processed. The gum base of the present invention is also hydrophilic and may be used as a delivery for an active agent or medicament. It has also been noted that when chewed, the present invention pulls debris off of the teeth of the chewer.

Chewing gum generally comprises a water-soluble portion and a water insoluble portion. The water insoluble portion is referred to as the gum base.

Pursuant to the present invention, the water-insoluble portion of the gum typically may contain any combination of elastomers, vinyl polymers, elastomer plasticizers, softeners, waxes and other optional ingredients such as colorants and antioxidants. The variety of gum base ingredients may be used provide the ability to modify the chewing characteristics of gums made from the gum base.

Elastomers provide the rubbery, cohesive nature to the gum which varies depending on this ingredient's chemical structure and how it is compounded with other ingredients. Elastomers suitable for use in the gum base and gum of the present invention include butadiene-styrene copolymers (SBR), isobutylene-isoprene copolymers (Butyl rubber), polybutadiene, polyisobutylene, and vinyl polymeric elastomers (polyvinyl acetate, polyethylene, vinyl acetate/vinyl laurate, vinyl acetate/vinyl stearate, ethylene/vinyl acetate) or mixtures thereof.

Other optional ingredients such as antioxidants may also be used in the gum base.

Antioxidants prolong shelf life and storage of gum base, finished gum or their respective components, including fats and flavor oils. Antioxidants suitable for use in gum base or gum of the present invention include butylated hydroxyanisole (BHA), butylated hydroxytoluene (BHT), beta-carotenes, tocopherols, acidulants such as vitamin C, propyl gallate, and other synthetic and natural types, or mixtures thereof.

Preferably, the antioxidants used in the gum base are butylated hydroxyanisole (BHA), butylated hydroxytoluene (BHT), tocopherols, or mixtures thereof.

Waxes may be used in the gum base. Waxes aid in the solidification of gum bases and improving the shelf life and texture. Wax crystal also improves the release of flavor. The smaller crystal size allows slower release of flavor since there is more hindrance of the flavor's escape from this wax versus a wax having larger crystal sizes.

Synthetic waxes are produced by means atypical of petroleum wax production and thus are not considered petroleum wax. These synthetic waxes may be used in accordance with the present invention and may be included optionally in the gum base and gum.

The synthetic waxes may include waxes containing branched alkanes and copolymerized with monomers such as, but not limited to, polypropylene and polyethylene and Fischer-Tropsch type waxes. Polyethylene wax is not in the same category as polyethylene, a polymer of ethylene monomers. Rather, polyethylene wax is a synthetic wax containing alkane units of varying lengths having attached thereto ethylene monomers.

Wax-free gum bases are specifically contemplated by the present invention. In these embodiments, wax is omitted and may be compensated for by using increased levels of fats and oils as is known in the prior art.

Elastomer plasticizers vary the firmness of the gum base. The plasticizers are glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha-pinene, beta-pinene and/or d-limonene and mixtures thereof.

The elastomer plasticizers used may be of one type or of combinations of more than one. Typically, the ratios of one to the other are dependent on each respective softening point, on each effect on flavor release, and on each respective degree of tack they cause to the gum.

Particle size of fillers has an effect on cohesiveness, density and processing characteristics of the gum base and its compounding. The smaller the particle size, the more dense and cohesive the final gum base. Also, by selecting fillers based on their particle size distribution, initial mass compounding may be varied, thus allowing alteration of the compounding characteristics of the initial mass during gum base processing and ultimately the final chew characteristics of gums made from these gum bases.

Talc filler may be used in the gum base and gum of the present invention that may come in contact with or employ acid flavors or provide an acidic environment needed to prevent degradation of an artificial sweetener by reacting with calcium carbonate type fillers. Mean particle size for calcium carbonate and talc fillers typically range from 0.1 µm (micron) to 15 µm (microns).

More preferably, the optional fillers used have a mean preferably particle size range from 0.4 to 14 µm (microns) are calcium carbonate and talc.

Flavorants and colorants impart characteristics or remove or mask undesired characteristics. Colorants may typically include FDBC type lakes, plant extracts, fruit and vegetable extracts and titanium dioxide. Flavorants may typically include cocoa powder, heat-modified amino acids and other vegetable extracts;

Gum bases are typically prepared by adding an amount of the elastomer and plasticizer to a heated sigma blade mixer with a front to rear speed ratio of 1.2:1 to 2:1, the higher ratio typically being used for chewing gum base which requires more rigorous compounding of its elastomers.

Compounding typically begins to be effective once the ingredients have massed together. Anywhere from 15 minutes to 90 minutes maybe the length of compounding time. Preferably, the time of compounding is from 20 minutes to 60 minutes. The amount of added plasticizer depends on the level of elastomer present. If too much elastomer plasticizer is added, the initial mass becomes over plasticized and not homogeneous.

Continuous processes using mixing extruders may also be used to prepare the gum base. After the initial ingredients have massed homogeneously and been compounded for the time desired, the balances of the base ingredients are added in a sequential manner until a completely homogeneous molten mass is attained. Typically, any remainder of elastomer and plasticizer are added within approximately 60 minutes after the initial compounding time. The optional waxes and the oils are typically added after the elastomer and plasticizers and during the next 60 minutes. Then the mass is allowed to become homogeneous before discharging.

U.S. Patent Number 6,238,710 claims a method for continuous chewing gum base manufacturing. The method entails compounding all ingredients in a single extruder. U.S. Patent Number 6,086,925 discloses the manufacture of chewing gum base by adding a hard elastomer, a filler and a lubricating agent to a continuous mixer. U.S. Patent Number 6,017,565, discloses a continuous manufacture process which automatically and continuously feeds ingredients into an apparatus, mixes, and discharges the desired end product. The end product is automatically dusted, rolled scored and wrapped.

Typical base batch processing times may vary from one to three hours, preferably from 1.5 to 2.5 hours, depending on the formulation. The final mass temperature when discharged may be between 50°C and 130°C and preferably between 70°C and 120°C. The completed molten mass is emptied from the mixing kettle into coated or lined pans, extruded or cast into any desirable shape and allowed to cool and solidify. Those skilled in the art will recognize that many variations of the above described procedure may be followed.

In the alternative continuous process, ingredients are added continuously at various points along the length of the extruder. In this case, the transmit time through the extruder would be substantially less than an hour.

The water-soluble portion of the chewing gum may comprise softeners, sweeteners, flavoring agents and combinations thereof The sweeteners often fill the role of bulking agents in the gum. The bulking agents generally comprise from 5 percent to 90 percent, preferably from 20 percent to 80 percent.

Softeners are added to the chewing gum in order to optimize the chewability and mouth feel of the gum. Softeners typically constitute from 0.5 percent to 25.0 percent by weight of the chewing gum. Softeners contemplated for use in the gum include glycerin, lecithin and combinations thereof. Further, aqueous sweetener solutions such as those containing sorbitol, hydrogenated starch hydrolysates, corn syrup and combinations thereof may be used as softeners and bulking agents in gum. Sugar-free formulations are also typical.

Sugar sweeteners generally include saccharide-containing components commonly known in the chewing gum art which comprise, but are not limited to, sucrose, dextrose, maltose, dextrin, dried invert sugar, fructose, levulose, galactose, corn syrup solids and the like, alone or in any combination.

The present invention can also be used in combination with sugarless sweeteners. Generally, sugarless, sweeteners include components with sweetening characteristics but which are devoid of the commonly known sugars and comprise, but are not limited to, sugar alcohols such as sorbitol, mannitol, xylitol, hydrogenated starch hydrolysates, maltitol and the like, alone or in any combination.

A flavoring agent may be present in the chewing gum in an amount within the range of from 0.1 to 10.0 weight percent, and preferably from 0.5 to 3.0 weight percent of the gum. The flavoring agents may comprise essential oils; synthetic flavors, or mixtures thereof including, but not limited to, oils derived from plants and fruits such as citrus oils, fruit essences, peppermint oil, spearmint oil, close oil, oil of wintergreen, anise and the like. Artificial flavoring components are also contemplated for use in gums of the present invention. Those skilled in the art will recognize that natural and artificial flavoring agents may be combined in any sensory acceptable blend All such flavors and flavor blends are contemplated for use in gums of the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the initial ingredients have been thoroughly mixed, the gum mass is discharged from the mixer and shaped into the desired form such as by rolling into sheets and cutting into sticks, extruded into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor have been added.

The entire mixing procedure typically takes from five to fifteen minutes, but longer mixing times may sometimes be required. Those skilled in the art will recognize that many variations of the above described procedure may be followed. Again, one specifically contemplated embodiment is the use of an extruding mixer for continuous processing. In such a process, ingredients are added continuously at various points along the length of the extruder while homogeneously mixed gum continuously issues from the discharge end of the extruder.

The following tables show examples of formulas as possible embodiments of the present invention. The present invention is not limited to the following formulas, they are just intended as examples.

Examples 5, 8 and 10 are not within the scope of the claims and do not constitute embodiments of the present invention.

Specific components use in the present invention are as follows. Percentages are by weight of the chewing gum base. Example 1, the UHMW PVAc used were 30% Wacker UW4 and 30% Wacker B100, the Plasticizers used 25% triacetin and 10% medium chain triglyceride and the filler is calcium carbonate at 5%. In Example 2 the UHMW PVAc used were 10% Wacker UW4, 20% Wacker B100, and 30% Wacker Linac. The Plasticizers used 25% triacetin and 10% medium chain triglyceride and the filler is calcium carbonate at 5%, 5% monoglyceride, and 5% sucrose stearate ester.

| **Gum Base** | Ex. 1 | Ex. 2 | Ex. 3 | Ex. 4 | Ex. 5 | Ex. 6 |
|---|---|---|---|---|---|---|
| **Ingredient** | **% wt.** | **% wt.** | **% wt.** | **% wt.** | **% wt.** | **% wt.** |
| UHMW PVAc* | 60 | 60 | 65 | 60 | 68 | 60 |
| Plasticizer | 35 | 30 | 25 | 30 | 27 | 35 |
| Filler | 5 | 5 | 5 | 5 | 5 | 5 |
| Emulsifier | | 5 | 5 | 5 | - | - |
| Total Percent | 100.00 | 100.00 | 100.00 | 100.00 | 100.00 | 100.00 |

| **Gum Base** | Example 7 | Example 8 | Example 9 | Example 10 | Example 11 | Example 12 |
|---|---|---|---|---|---|---|
| **Ingredient** | **% weight** | **% weight** | **% weight** | **% weight** | **% weight** | **% weight** |
| UHMW PVAc* | 22 | 10 | 20 | 7 | 18 | 15 |
| Low PVAc | 18 | 11 | 5 | 27 | 15 | 5 |
| Medium PVAc | 10 | 30 | 20 | - | 20 | 10 |
| High PVAc | - | - | 20 | 20 | 12 | 30 |
| Plasticizer | 43 | 29 | 18 | 26 | 27 | 35 |
| Filler | 7 | 10 | 4 | 5 | 8 | 5 |
| Emulsifier | - | 10 | 13 | 15 | - | - |
| Total Percent | 100.00 | 100.00 | 100.00 | 100.00 | 100.00 | 100.00 |

| | | | | | | |
|---|---|---|---|---|---|---|
| ● UHMW PVAc is Ultra High Molecular Weigh Polyvinylacetate. | | | | | | |

Example 3 and Example 4 were tested against a Control in a removability study. The control used in this study was U.K. Extra Peppermint, which is commercially available. A chewed cud was stuck and indoor surface and an outdoor surface. A Tenant scrubber with nylon brushes and a rubber scraper was used to determine the removability of the chewed cuds. The smooth indoor surface had 100% removability for both Example 3 and Example 4. The outdoor surface had 100% removability with Example 3 and about 30% with Example 4. These results are due to the increased cohesion of the chewing gum base when the ultra high molecular weight PVAc is added to the formulation.

| Scraper Test | % Removed From Indoor Smooth Surface | % Removed From Outdoor Rough Surface |
|---|---|---|
| Control | 10 | 10 |
| Example 3 | 100 | 100 |
| Example 4 | 100 | 30 |

## Claims

1. A chewing gum base comprising:
a) 15 to 65% by weight ultra high molecular weight polyvinylacetate with molecular weight ranging between 300,000 and 600,000 daltons;
b) 10 to 50% by weight plasticizer; and
c) 1 to 30% by weight filler.

2. The chewing gum base of claim 1 wherein said plasticizer is selected from the group consisting of triacetin, acetylated mono- and di- and triglycerides of short chain fatty acids, acetylated mono- and di- and triglycerides of medium chain fatty acids, acetylated monoglycerides of long chain fatty acids, methyl ester of rosin, low molecular weight PVAc and combinations thereof.

3. The chewing gum base of claim 1 wherein said filler is selected from the group consisting of carbonate, precipitated carbonate, magnesium, calcium carbonate, ground limestone, magnesium silicate, aluminium silicate, clay, alumina, talc, titanium dioxide, mono-, di- and tricalcium phosphate, silica, ethyl cellulose, methyl cellulose, and wood, organic powders, polystyrene, polyethylene, oat fiber, wood fiber, apple fiber, zein, gluten, gliadin, casein and combinations thereof.

4. The chewing gum base of claim 1 wherein said plasticizer is selected from the group consisting of triglycerides of non-hydrogenated, partially hydrogenated and fully hydrogenated cottonseed oil, soybean oil, palm oil, palm kernel oil, coconut oil, safflower oil, tallow oil, cocoa butter, medium chained triglycerides, unsaturated oils, monoglycerides, diglycerides, acetylated monoglycerides, distilled mono- and di- glycerides, lecithin and combinations thereof.

5. The chewing gum base of claim 1, wherein said chewing gum base further comprises an emulsifier.

6. The chewing gum base of claim 5, wherein said emulsifier is present in an amount up to 60% by weight of said chewing gum base.

7. The chewing gum base of claim 5, wherein said chewing emulsifier is selected from the group consisting of glycerol mono and distearate, lecithin, mono and di- glycerides of fatty acids, triacetin, acetylated monoglyceride, polyglycerol esters, glycerol triacetate and carbohydrate polyesters, sucrose esters, sugar fatty acid ester, sucrose stearate ester, non-ionic surfactants and combinations thereof.

8. The chewing gum base of claim 5, wherein said emulsifier is selected from the group consisting of sucrose esters, sugar fatty acid esters, sucrose stearate esters and combinations thereof.

9. The chewing gum base of claim 1 wherein said chewing gum base further comprises a polyvinylacetate of a molecular weight ranging from 2,000 to 99,000 daltons.

10. The chewing gum base of claim 1 wherein said chewing gum base further comprises a low molecular weight PVAc ranging from 2,000 to 20,000 daltons.

11. The chewing gum base of claim 10, wherein said low molecular weight PVAc is present in an amount up to 50% by weight of said chewing gum base.

12. The chewing gum base of claim 1 wherein said chewing gum base further comprises a medium molecular weight PVAc ranging from 20,001 to 60,000 daltons.

13. The chewing gum base of claim 12 wherein said medium molecular weight PVAc is present in an amount up to 50% by weight of said chewing gum base.

14. The chewing gum base of claim 1 wherein said chewing gum-base further comprises a high molecular weight PVAc ranging from 60,001 to 90,000 daltons.

15. The chewing gum base of claim 14, wherein said high molecular weight PVAc is present in an amount up to 50% by weight of said chewing gum base.

16. A chewing gum composition made of flavour, sweetener and a chewing gum base as defined in any one of the preceding claims.

17. The chewing gum composition of claim 16 wherein after being chewed a chewing gum cud remains which is easily removable from indoor and outdoor surfaces.

## Patentansprüche

1. Kaugummi-Base, umfassend
a) 15 bis 65 Gew.-% ultrahochmolekulares Polyvinylacetat mit einer Molmasse von 300 000 bis 600 000 Dalton;
b) 10 bis 50 Gew.-% Weichmacher und
c) 1 bis 30 Gew.-% Füllstoff.

2. Kaugummi-Base gemäß Anspruch 1, wobei der genannte Weichmacher aus folgender Liste ausgewählt wird: Triacetin, acetylierte Mono- und Di- und Triglyceride mit Fettsäuren kurzer Kettenlängen, acetylierte Mono- und Di- und Triglyceride mit Fettsäuren mittlerer Kettenlängen, acetylierte Monoglyceride mit Fettsäuren langer Kettenlängen, Methylester von Kolophonium, niedermolekulares PVAc und Kombinationen davon.

3. Kaugummi-Base gemäß Anspruch 1, wobei der genannte Weichmacher aus folgender Liste ausgewählt wird: Carbonat, gefälltes Carbonat, Magnesium- und Calciumcarbonat, gemahlener Kalkstein, Magnesiumsilicat, Aluminiumsilicat, Ton, Aluminiumoxid, Talk, Titandioxid, Mono-, Di- und Tricalciumphosphat, Siliciumoxid, Ethylcellulose, Methylcellulose und Holzcellulose, organische Pulver, Polystyrol, Polyethylen, Haferfaser, Holzfaser, Apfelfaser, Zein, Gluten, Gliadin, Casein und deren Gemischen.

4. Kaugummi-Base gemäß Anspruch 1, wobei der genannte Weichmacher aus folgender Liste ausgewählt wird: Triglyceriden von nichthydriertem, partiell hydriertem und vollständig hydriertem Baumwollsamenöl, Sojaöl, Palmöl, Palmkernöl, Kokosnussöl, Distelöl, Talgöl, Kakaobutter, Triglyceriden mittlerer Kettenlänge, ungesättigten Ölen, Monoglyceriden, Diglyceriden, acetylierten Monoglyceriden, destillierten Mono- und Diglyceriden, Lecithin und Kombinationen davon.

5. Kaugummi-Base gemäß Anspruch 1, wobei die genannte Kaugummi-Base zusätzlich einen Emulgator enthält.

6. Kaugummi-Base gemäß Anspruch 5, wobei der Emulgator in einem Anteil von bis zu 60 %, bezogen auf das Gewicht der genannten Kaugummi-Base, vorliegt.

7. Kaugummi-Base gemäß Anspruch 5, wobei der genannte Kaugummiemulgator aus folgender Liste ausgewählt wird: Glycerinmono- und -distearat, Lecithin, Mono- und Diglyceriden von Fettsäuren, Triacetin, acetylierten Monoglyceriden, Polyglycerinestern, Triacetylglyceriden und Kohlenhydrat-Polyestern, Saccharoseestern, Zuckerfettsäureestern, Saccharosestearinsäureestern, nichtionischen Tensiden und Kombinationen davon.

8. Kaugummi-Base gemäß Anspruch 5, wobei der Emulgator aus folgender Liste ausgewählt wird: Saccharoseestern, Zuckerfettsäureestern, Saccharosestearinsäureestern und Kombinationen davon.

9. Kaugummi-Base gemäß Anspruch 1, wobei die genannte Kaugummi-Base zusätzlich ein Polyvinylacetat mit einer molaren Masse von 2 000 bis 99 000 Dalton enthält.

10. Kaugummi-Base gemäß Anspruch 1, wobei die genannte Kaugummi-Base zusätzlich ein niedermolekulares Polyvinylacetat von 2 000 bis 20 000 Dalton enthält.

11. Kaugummi-Base gemäß Anspruch 10, wobei das genannte niedermolekulare PVAc in einem Anteil von bis zu 50 %, bezogen auf das Gewicht der genannten Kaugummi-Base, vorhanden ist.

12. Kaugummi-Base gemäß Anspruch 1, wobei die genannte Kaugummi-Base zusätzlich ein mittelmolekulares Polyvinylacetat von 20 001 bis 60 000 Dalton enthält.

13. Kaugummi-Base gemäß Anspruch 12, wobei das genannte mittelmolekulare PVAc in einem Anteil von bis zu 50 %, bezogen auf das Gewicht der genannten Kaugummi-Base, vorhanden ist.

14. Kaugummi-Base gemäß Anspruch 1, wobei die genannte Kaugummi-Base zusätzlich ein hochmolekulares Polyvinylacetat von 60 001 bis 90 000 Dalton enthält.

15. Kaugummi-Base gemäß Anspruch 14, wobei das genannte hochmolekulare PVAc in einem Anteil von bis zu 50 %, bezogen auf das Gewicht der genannten Kaugummi-Base, vorhanden ist.

16. Kaugummizusammensetzung, hergestellt aus Geschmacksstoffen, Süßstoffen und einer Kaugummi-Base, wie sie in einem der vorhergehenden Ansprüche definiert ist.

17. Kaugummi-Base gemäß Anspruch 16, bei der nach dem Kauen ein Kaugummiklumpen zurückbleibt, der von Oberflächen in geschlossenen Räumen und von Oberflächen im Freien leicht entfernbar ist.

## Revendications

1. Base de gomme à mâcher comprenant :
a) 15 à 65 % en poids d'acétate de polyvinyle de poids moléculaire très élevé, ayant un poids moléculaire compris entre 300 000 et 600 000 daltons ;
b) 10 à 50 % en poids de plastifiant ; et
c) 1 à 30 % en poids de charge.

2. Base de gomme à mâcher selon la revendication 1, dans laquelle ledit plastifiant est choisi dans l'ensemble constitué de triacétine, de mono-, di- et triglycérides acétylés d'acides gras à chaîne courte, de mono-, di- et triglycérides acétylés d'acides gras à chaîne moyenne, de monoglycérides acétylés d'acides gras à chaîne longue, d'ester méthylique de colophane, de PVAc de poids moléculaire bas et de combinaisons de ceux-ci.

3. Base de gomme à mâcher selon la revendication 1, dans laquelle ladite charge est choisie dans l'ensemble constitué de carbonate, carbonate précipité, magnésium, carbonate de calcium, calcaire broyé, silicate de magnésium, silicate d'aluminium, argile, alumine, talc, dioxyde de titane, phosphate mono-, di- et tricalcique, silice, éthylcellulose, méthylcellulose et bois, poudres organiques, polystyrène, polyéthylène, fibre d'avoine, fibre de bois, fibre de pomme, zéine, gluten, gliadine, caséine et des combinaisons de ceux-ci.

4. Base de gomme à mâcher selon la revendication 1, dans laquelle ledit plastifiant est choisi dans l'ensemble constitué de triglycérides d'huile de graines de cotonnier non hydrogénée, partiellement hydrogénée et complètement hydrogénée, huile de soja, huile de palme, huile de palmiste, huile de noix de coco, huile de tournesol, huile de suif, beurre de cacao, triglycérides à chaîne moyenne, huiles insaturées, monoglycérides, diglycérides, monoglycérides acétylés, mono- et diglycérides distillés, lécithine et des combinaisons de ceux-ci.

5. Base de gomme à mâcher selon la revendication 1, ladite base de gomme à mâcher comprenant en outre un émulsifiant.

6. Base de gomme à mâcher selon la revendication 5, dans laquelle ledit émulsifiant est présent en une quantité allant jusqu'à 60 % en poids de ladite base de gomme à mâcher.

7. Base de gomme à mâcher selon la revendication 5, dans laquelle ledit émulsifiant est choisi dans l'ensemble constitué de mono- et distéarates de glycérol, lécithine, mono- et diglycérides d'acides gras, triacétine, monoglycérides acétylés, esters de polyglycérol, triacétate de glycérol et polyesters glucidiques, esters de saccharose, ester d'acides gras et de sucre, ester stéarate de saccharose, agents tensioactifs non ioniques et des combinaisons de ceux-ci.

8. Base de gomme à mâcher selon la revendication 5, dans laquelle ledit émulsifiant est choisi dans l'ensemble constitué d'esters de saccharose, d'esters d'acides gras et de sucre, d'esters stéarate de saccharose et de combinaisons de ceux-ci.

9. Base de gomme à mâcher selon la revendication 1, ladite base de gomme à mâcher comprenant en outre un acétate de polyvinyle ayant un poids moléculaire compris entre 2000 et 99 000 daltons.

10. Base de gomme à mâcher selon la revendication 1, ladite base de gomme à mâcher comprenant en outre un PVAc de poids moléculaire bas compris entre 2000 et 20 000 daltons.

11. Base de gomme à mâcher selon la revendication 10, dans laquelle ledit PVAc de poids moléculaire bas est présent en une quantité allant jusqu'à 50 % en poids de ladite base de gomme à mâcher.

12. Base de gomme à mâcher selon la revendication 1, ladite base de gomme à mâcher comprenant en outre un PVAc de poids moléculaire moyen compris entre 20 001 et 60 000 daltons.

13. Base de gomme à mâcher selon la revendication 12, dans laquelle ledit PVAc de poids moléculaire moyen est présent en une quantité allant jusqu'à 50 % en poids de ladite base de gomme à mâcher.

14. Base de gomme à mâcher selon la revendication 1, ladite base de gomme à mâcher comprenant en outre un PVAc de poids moléculaire élevé compris entre 60 001 et 90 000 daltons.

15. Base de gomme à mâcher selon la revendication 14, dans laquelle ledit PVAc de poids moléculaire élevé est présent en une quantité allant jusqu'à 50 % en poids de ladite base de gomme à mâcher.

16. Composition de gomme à mâcher constituée d'un arôme, d'un édulcorant et d'une base de gomme à mâcher telle que définie dans l'une quelconque des revendications précédentes.

17. Composition de gomme à mâcher selon la revendication 16, dont, après qu'elle a été mâchée, il subsiste un résidu de gomme à mâcher qu'on peut facilement enlever de surfaces en intérieur et en extérieur.
